(19) Europäisches Patentamt / European Patent Office / Office européen des brevets

(11) **EP 1 115 186 B1**

(12) **FASCICULE DE BREVET EUROPEEN**

(45) Date de publication et mention
de la délivrance du brevet:
**06.02.2008   Bulletin 2008/06**

(51) Int Cl.:
***H01S 3/0941*** *(2006.01)*

(21) Numéro de dépôt: **00403598.6**

(22) Date de dépôt: **20.12.2000**

(54) **Elément actif pour source laser et source laser comportant un tel élément actif**

Aktives Element für eine Laser-Quelle und Anwendung in einer Laser-Quelle

Active element for a laser source and laser source incorporating the same

(84) Etats contractants désignés:
**DE GB**

(30) Priorité:  **06.01.2000  FR 0000128**

(43) Date de publication de la demande:
**11.07.2001   Bulletin 2001/28**

(73) Titulaire: **COMPAGNIE INDUSTRIELLE DES LASERS CILAS**
**F-91460 Marcoussis (FR)**

(72) Inventeurs:
• **Cabaret, Louis**
**91410 Plessis St Benoist (FR)**
• **Montagne, Jean-Eucher**
**45000 Orleans (FR)**

(74) Mandataire: **Hauer, Bernard**
**Cabinet Bonnétat**
**29, Rue de Saint-Pétersbourg**
**75008 Paris (FR)**

(56) Documents cités:
**EP-A- 0 404 635          EP-A- 0 902 511**
**FR-A- 2 303 397          US-A- 5 048 026**
**US-A- 5 974 061**

• **PATENT ABSTRACTS OF JAPAN vol. 1996, no. 04, 30 avril 1996 (1996-04-30) & JP 07 321394 A (NEC CORP), 8 décembre 1995 (1995-12-08)**
• **PATENT ABSTRACTS OF JAPAN vol. 017, no. 378 (E-1398), 15 juillet 1993 (1993-07-15) & JP 05 063263 A (HOYA CORP), 12 mars 1993 (1993-03-12)**

**Description**

La présente invention concerne un élément actif pour source laser, ainsi qu'une source laser comportant un tel élément actif.

De façon connue, une telle source laser comporte généralement :

- un élément actif comprenant un barreau allongé, de section transversale généralement circulaire, mais non exclusivement, comportant une matrice dopée susceptible d'absorber un faisceau de pompage pour amplifier un rayonnement laser se propageant longitudinalement avec ou sans rebond ; et
- au moins une source de pompage, par exemple une diode laser, susceptible d'émettre un faisceau de pompage pénétrant dans ledit barreau.

De façon connue, ledit faisceau de pompage peut être émis :

- soit longitudinalement par rapport à l'axe dudit barreau allongé. Dans ce cas, on utilise directement le barreau de forme cylindrique comme guide de lumière, soit en engendrant une réflexion totale sur les parois du cylindre, soit en agençant un réflecteur à l'extérieur des parois pour limiter l'amplification de l'émission spontanée ;
- soit transversalement à l'axe dudit barreau, comme décrit par exemple dans les documents EP-0 377 207 et US-4 756 002.

On sait que l'une des contraintes principales, en ce qui concerne le pompage du milieu amplificateur (barreau) par une source de pompage, est liée à l'amplitude de la dérive en longueur d'onde, qui doit être acceptée, tout en conservant des paramètres constants sur le faisceau laser émis. Cette contrainte rend nécessaire de maintenir, quelle que soit la température :

- un taux d'absorption maximal (et/ou d'augmenter la distance du milieu actif traversé par le faisceau de pompage) ; et
- une homogénéité transversale du pompage optimale.

Pour satisfaire à ces contraintes, on sait qu'un barreau de section transversale rectangulaire est généralement mieux adapté qu'un barreau de section transversale circulaire, car il permet notamment de compenser les distorsions thermo-optiques. De plus, la distance de pompage peut être augmentée en disposant un réflecteur sur la face opposée à la face d'entrée du faisceau de pompage.

Toutefois, même dans ce cas, avec un double passage du faisceau de pompage, la distance du milieu amplificateur traversé par ce dernier est généralement encore bien trop courte pour accepter les dérives en longueur d'onde de la source de pompage, lorsqu'elle n'est pas régulée en température.

La présente invention a pour objet de remédier à ces inconvénients. Elle concerne un élément actif pour source laser, permettant à un faisceau de pompage de traverser le milieu amplificateur, de façon homogène, sur une distance accrue et contrôlable.

A cet effet, selon l'invention, ledit élément actif pour source laser comportant un bloc optique qui comprend :

- un barreau allongé, qui comprend une matrice dopée susceptible d'absorber un faisceau de pompage pour amplifier un rayonnement laser se propageant longitudinalement, et qui est intégré dans ledit bloc optique ;
- au moins une face d'entrée du faisceau de pompage ;
- une première face de réflexion du faisceau de pompage qui est inclinée par rapport à l'axe longitudinal dudit barreau ; et
- au moins une seconde face de réflexion qui coopère avec ladite première face de réflexion,

est remarquable en ce que ladite face d'entrée est inclinée par rapport à l'axe longitudinal dudit barreau.

Ainsi, grâce aux réflexions multiples susceptibles d'être réalisées sur lesdites faces de réflexion coopérantes et à la transmission oblique du faisceau de pompage, obtenue par l'inclinaison desdites faces inclinées, ledit faisceau de pompage peut traverser le milieu amplificateur (à savoir ledit barreau) sur une distance accrue, ce qui permet de remédier aux inconvénients précités. Cette distance peut être contrôlée, notamment en choisissant des angles d'inclinaison appropriés, par rapport à l'axe longitudinal du barreau.

De plus, par un choix approprié desdits angles d'inclinaison, on peut également homogénéiser le pompage transversal.

On remarquera que les documents antérieurs EP-0 404 635 et US-5 048 026 décrivent des éléments actifs pour source laser présentant une structure voisine de celle de l'élément actif conforme à la présente invention. Cependant, ces éléments actifs connus ne comportent pas de face d'entrée inclinée par rapport à l'axe longitudinal du barreau, de sorte qu'ils ne permettent pas de contrôler la distance traversée du milieu amplificateur, ni d'homogénéiser transversalement le pompage ou de régler précisément le retour du faisceau de pompage.

Dans un mode de réalisation préféré de l'élément actif conforme à la présente invention, ledit barreau présente une section transversale rectangulaire, par exemple carrée, et ledit bloc optique comporte au moins un premier élément optique qui est réalisé dans un matériau présentant sensiblement le même indice optique que la matrice dudit barreau, qui est fixé sur une première face dudit barreau et qui présente au moins une face inclinée par rapport à l'axe longitudinal dudit barreau, et ladite première face de réflexion inclinée est formée sur ladite face inclinée dudit premier élément optique.

Dans ce cas, dans une première variante, ledit bloc optique comporte de plus un second élément optique qui est réalisé dans un matériau présentant sensiblement le même indice optique que la matrice dudit barreau, qui est fixé sur une seconde face dudit barreau et qui présente au moins une face inclinée par rapport à l'axe longitudinal dudit barreau, et la seconde face de réflexion est formée sur ladite face inclinée dudit second élément optique.

Dans ce cas, de préférence, lesdits premier et second éléments optiques sont identiques et sont fixés de façon symétrique sur ledit barreau, ce qui permet notamment de faciliter l'homogénéisation du pompage.

Par ailleurs, dans une seconde variante, ladite seconde face de réflexion est directement formée sur une face dudit barreau.

En outre, selon l'invention, lesdites faces de réflexion sont :

- soit planes ;
- soit arrondies.

Dans ce dernier cas, de préférence, chacune desdites faces de réflexion forme une section d'une surface conique d'un premier tronçon conique d'un élément optique.

De plus, avantageusement, ledit élément optique comprend un second tronçon conique, lesdits premier et second tronçons coniques entourent de façon coaxiale ledit barreau et sont réalisés dans un matériau présentant sensiblement le même indice optique que la matrice dudit barreau, et la surface conique dudit second tronçon conique comprend ladite face d'entrée dudit bloc optique.

En outre, de façon avantageuse, ladite face d'entrée est munie d'un revêtement antireflet.

Par ailleurs, avantageusement, au moins l'un desdits éléments optiques :

- est dopé, de préférence différemment que le barreau, en particulier pour maîtriser d'éventuels phénomènes parasites ; et/ou
- est réalisé dans au moins l'un des matériaux suivants : du grenat d'yttrium-aluminium, du vanadate, du verre et du saphir ; et/ou
- est fixé par un soudage par diffusion ("diffusion bonding") sur ledit barreau. La réalisation séparée du barreau et des éléments optiques permet de mettre en oeuvre un usinage simple et facilite donc la réalisation dudit élément actif pour source laser.

En outre, chacun desdits éléments optiques peut être fixé sur une face de barreau, de préférence de la manière précitée :

- soit directement ;
- soit indirectement, par exemple dans un mode de réalisation particulier où l'élément actif comporte une circulation de fluide de refroidissement entre une face du barreau et la face opposée d'un élément optique.

La présente invention concerne également une source laser du type comportant :

- un élément actif pour source laser ; et
- au moins une source de pompage susceptible d'émettre un faisceau de pompage pénétrant dans ledit élément actif.

Selon l'invention, ladite source laser est remarquable en ce que ledit élément actif est tel que celui précité.

En outre, avantageusement, la source de pompage présente une surface d'émission du faisceau de pompage, dont la largeur est plus petite d'une marge prédéfinie que la largeur de ladite face d'entrée de l'élément actif.

Les figures du dessin annexé feront bien comprendre comment l'invention peut être réalisée. Sur ces figures, des références identiques désignent des éléments semblables.

La figure 1 illustre schématiquement une source laser conforme à un premier mode de réalisation de l'invention.

La figure 2 montre schématiquement le trajet d'un rayon de pompage moyen avec un retour symétrique dans la source laser illustrée sur la figure 1.

La figure 3 montre schématiquement le trajet d'un rayon de pompage qui est décalé latéralement par rapport à un rayon de pompage moyen dans la source laser illustrée sur la figure 1.

La figure 4 montre schématiquement le trajet d'un rayon de pompage moyen qui est décalé angulairement par rapport à un rayon de pompage moyen dans la source laser illustrée sur la figure 1.

La figure 5 est un graphique permettant de définir les faces d'entrée de la source laser illustrée sur la figure 1.

La figure 6 est un graphique illustrant les cotes externes de la source laser représentée sur la figure 1.

Les figures 7 et 8 illustrent schématiquement une source laser conforme respectivement à des deuxième et troisième modes de réalisation de l'invention.

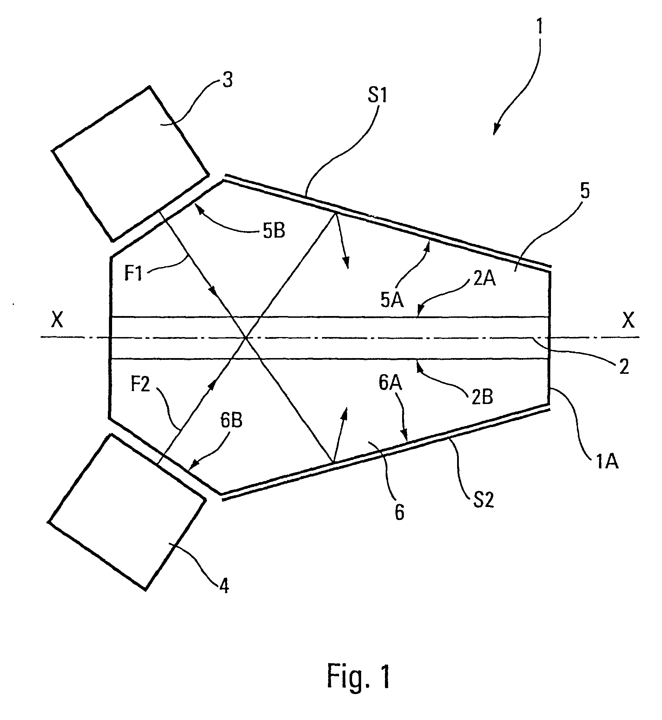

La source laser 1 conforme à l'invention et représentée schématiquement dans un premier mode de réalisation préféré sur la figure 1, comporte de façon connue :

- un élément actif 1A pour source laser, qui comprend un barreau 2 allongé, d'axe longitudinal X-X et de section transversale rectangulaire, par exemple carrée. Ledit barreau 2 de type usuel comporte une matrice dopée susceptible d'absorber un faisceau de pompage pour amplifier un rayonnement laser se propageant longitudinalement ; et
- des sources de pompage 3, 4, de préférence des diodes laser, qui sont susceptibles d'émettre des faisceaux de pompage F1, F2 destinés à pénétrer dans ledit barreau 2 et à traverser le milieu amplificateur formé par ce dernier.

Selon l'invention, ledit élément actif 1A, qui est réalisé sous forme d'un bloc optique, comporte de plus :

- des éléments optiques 5 et 6 qui sont réalisés dans le même matériau précisé ci-dessous que la matrice du barreau 2 ou tout au moins dans un matériau présentant sensiblement le même indice optique que ladite matrice, qui sont fixés respectivement sur des faces 2A et 2B dudit barreau 2 et qui présentent chacun au moins une face d'entrée 5B, 6B du faisceau de pompage F1, F2, qui est inclinée par rapport à l'axe longitudinal X-X du barreau 2 ; et
- au moins deux faces de réflexion S1 et S2, dont au moins l'une est inclinée par rapport à l'axe X-X, avec une inclinaison opposée à celle des faces d'entrée 5B, 6B.

Dans le mode de réalisation représenté sur la figure 1, lesdites faces de réflexion S1 et S2 sont formées respectivement sur des faces 5A et 6A inclinées des éléments optiques 5 et 6 de sorte que ces deux faces de réflexion S1 et S2 sont inclinées par rapport à l'axe X-X.

De plus, les éléments optiques 5 et 6 sont identiques et sont agencés de façon symétrique par rapport audit axe X-X de sorte que les faces de réflexion S1 et S2 présentent la même inclinaison par rapport à l'axe X-X.

Il est toutefois également envisageable dans le cadre de la présente invention :

- de prévoir des faces de réflexion présentant des inclinaisons différentes par rapport à l'axe X-X ; et
- de former l'une des faces de réflexion sur l'une des faces 2A et 2B du barreau 2, qui sont parallèles à l'axe X-X de sorte que seule l'une desdites faces de réflexion est alors inclinée.

Ainsi, grâce à l'invention, les faisceaux de pompage F1 et F2 subissent une pluralité de réflexions, à savoir des réflexions totales, successivement et alternativement sur les faces S1 et S2 et traversent après chaque réflexion le barreau 2. De plus, comme chaque traversée du barreau 2 est oblique, elle est plus longue qu'une traversée transversale.

Par conséquent, la présente invention permet d'accroître la distance de traversée du milieu amplificateur.

De plus, par un choix approprié des angles d'inclinaison des faces d'entrée 5B, 6B (et donc des faisceaux de pompage F1 et F2 émis orthogonalement à ces faces d'entrée 5B, 6B) et des faces de réflexion S1 et S2, on peut, comme précisé ci-après :

- contrôler la distance de traversée du milieu amplificateur ; et
- homogénéiser transversalement le pompage,

ceci quelle que soit la température.

Les faces d'entrée 5B et 6B dudit bloc optique 1A sont de préférence pourvues de revêtements antireflets.

Dans le cadre de la présente invention, l'élément actif ou bloc optique 1A peut être réalisé en une seule pièce. Toutefois, de préférence, chaque élément optique 5, 6 dudit bloc optique est poli afin de réaliser un soudage par diffusion de type usuel dit "diffusion bonding" sur la face correspondante 2A, 2B du barreau 2, avant de procéder aux autres usinages du bloc optique.

De plus, selon l'invention :

- le matériau des éléments optiques 5, 6 et de la matrice du barreau 2 est un grenat d'yttrium-aluminium, du vanadate, du verre ou du saphir ; et

- le dopage de chaque barreau 2 est réalisé avec l'un des types d'ions suivants : du néodyme, de l'erbium, de l'holmium ou du chrome.

Généralement, les éléments optiques 5, 6, qui sont réalisés dans le même matériau ou dans un matériau présentant sensiblement le même indice optique que la matrice du barreau pour éviter des perturbations optiques, ne sont pas dopés.

Toutefois, dans un mode de réalisation particulier, on peut prévoir un dopage spécifique, en particulier pour maîtriser d'éventuels phénomènes parasites.

Par ailleurs, dans un mode de réalisation particulier non représenté, la source optique comporte plus de deux éléments optiques, de préférence quatre éléments optiques prévus respectivement sur les quatre faces du barreau 2 de section transversale rectangulaire. Ceci permet notamment d'augmenter le nombre de sources de pompage.

En plus des avantages précités, la source laser 1 conforme à la présente invention présente de nombreux autres avantages. En particulier :

- il n'existe pas de perte sur le faisceau de pompage ;
- aucune optique de couplage n'est nécessaire entre les sources de pompage 3, 4 et les éléments optiques 5, 6 ;
- on peut utiliser des sources de pompage usuelles (diodes commerciales standard) ;
- on obtient une source laser 1 robuste qui ne nécessite qu'un minimum de réglage ; et
- l'invention peut être appliquée à la plupart des configurations laser existants : oscillateur, amplificateur, basse énergie et haute énergie, montage en série, passage direct ou passages multiples.

On précise à présent les différentes données géométriques rencontrées dans la mise en oeuvre de la présente invention.

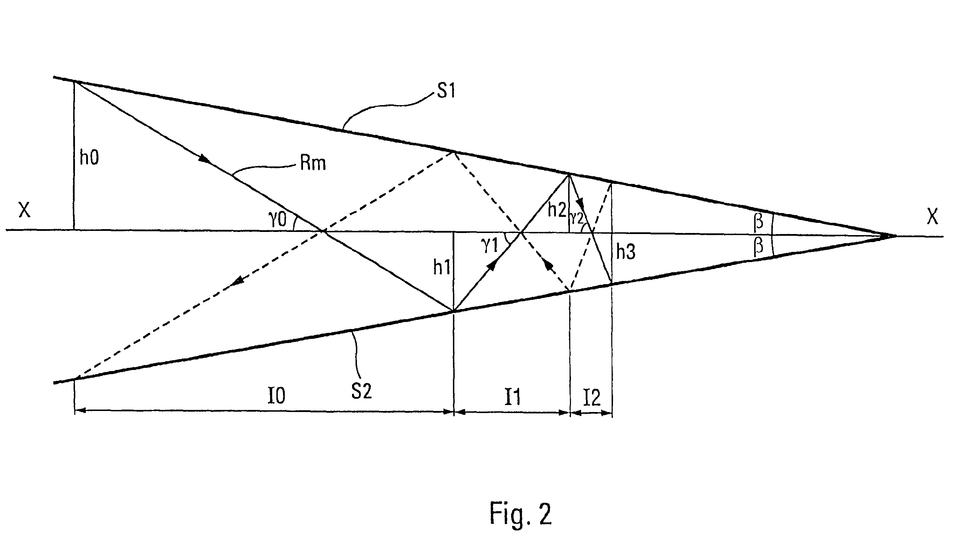

A cet effet, pour mettre en évidence les caractéristiques permettant notamment de déterminer les dimensions appropriées des éléments optiques 5 et 6, on se réfère à la figure 2 qui montre une représentation simplifiée du dièdre formé par les faces de réflexion S1 et S2 et servant de guide au faisceau de pompage. Ces faces de réflexion S1, S2 forment entre elles un angle $2\beta$.

On prend comme référence le rayon moyen Rm issu du centre de la source de pompage 3 et se propageant dans un plan orthogonal à l'arête du dièdre. On suppose qu'après avoir effectué $\underline{n}$ réflexions successives, ce rayon Rm revient en sens inverse en suivant un parcours retour qui est symétrique au parcours aller. Sur la figure 2, $\underline{n}$ est égal à 3. Ce rayon Rm de référence intercepte une face du dièdre à une hauteur h0 par rapport à l'axe de symétrie X-X et fait un angle $\gamma 0$ avec ce même axe.

Les valeurs h0, $\gamma 0$, n et $\beta$ sont les paramètres d'entrée caractérisant la propagation du rayon moyen Rm dans le guide de faisceau de pompage.

Lors d'une réflexion, le rayon Rm subit une rotation d'un angle $2(\gamma n\text{-}1+\beta)$, $\gamma n\text{-}1$ étant l'angle entre le rayon Rm et l'axe X-X avant la n$^{\text{ème}}$ réflexion. Ceci se traduit par un accroissement de $2\beta$ de l'angle $\gamma n\text{-}1$ après réflexion. Donc :

$$\gamma n \ = \ \gamma n\text{-}1 \ + \ 2\beta,$$

$\gamma n$ étant l'angle entre le rayon Rm et l'axe X-X après la n$^{\text{ème}}$ réflexion.

Soit encore par récurrence :

$$\gamma n \ = \ \gamma 0 \ + \ 2n\beta \qquad\qquad (1)$$

Lorsque le retour est symétrique, l'angle $\gamma nr$ après la dernière réflexion est un angle droit. On a alors :

$$\gamma nr \ = \ \pi/2 \ = \ \gamma 0 \ + \ 2nr\beta,$$

nr étant le nombre de réflexions avant retour.

On établit la relation simple suivante :

$$\gamma 0 \ = \ \pi/2 \ - \ 2nr\beta \qquad\qquad (2)$$

Le nombre nr de réflexions avant retour est un paramètre imposé par la longueur totale de matériau du barreau 2 que le faisceau de pompage F1, F2 doit traverser pour être complètement absorbé. Une fois ce nombre nr fixé, on souhaite connaître les dimensions qu'il faut donner à la source laser 1 compte tenu de l'encombrement des sources de pompage 3, 4 et de la partie dopée.

A partir de la figure 2, quelques relations de récurrence sont faciles à établir. Soit In la distance sur l'axe X-X entre deux réflexions successives n et n + 1, on a :

$$tg\ \gamma n \ = \ (hn \ + \ \delta)/In \qquad et \qquad tg\ \beta \ = \ (hn\text{-}\ \delta)/In, \quad avec\ \delta \ = \ hn+1$$

d'où on tire :

$$In \ = \ 2hn/[tg\ (\gamma 0 + 2n\beta) + tg\ \beta]$$

$$hn+1 \ = \ \delta \ = \ hn\text{-}In\ tg\ \beta$$

ou de façon équivalente :

$$hn+1 \ = \ hn\{[tg\ (\gamma 0 + 2n\beta)\text{-}tg\ \beta]/[tg\ (\gamma 0 + 2n\beta) + tg\ \beta]\}$$

Par applications successives de ces formules, on peut connaître la longueur totale de pompage, ainsi que l'ouverture à l'extrémité du guide.

Par ailleurs, pour évaluer le parcours d'un rayon marginal décalé R1, il est nécessaire de réaliser un décalage latéral par rapport audit rayon moyen Rm, donc sans changement de l'angle γn.

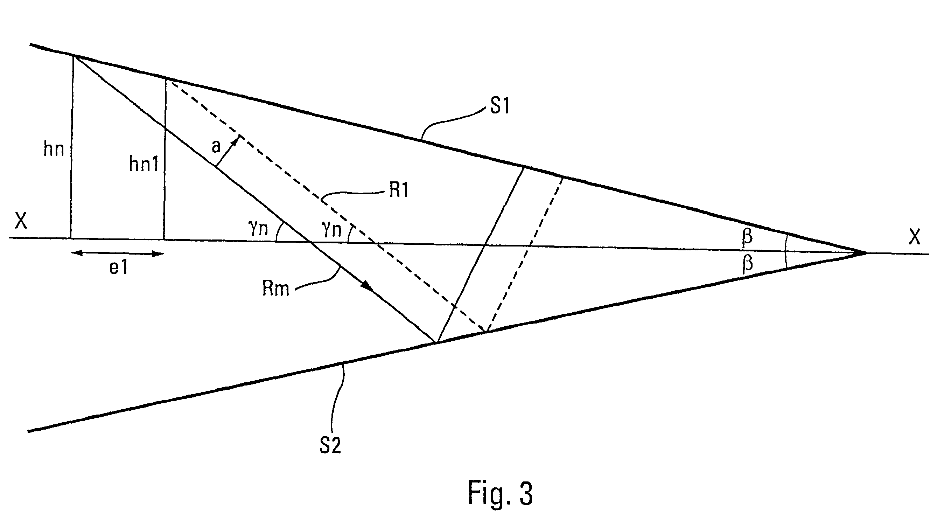

On suppose un décalage positif a par rapport au rayon moyen Rm (c'est-à-dire dont la projection sur l'axe X-X est dans le sens de propagation du rayon moyen Rm), comme représenté sur la figure 3.

On désigne par hn1 la hauteur, portée sur l'axe X-X, de l'intersection du nouveau rayon R1 avec la face S1 du dièdre. La relation suivante est vérifiée :

$$a/\sin\ (\gamma n\text{-}\beta) \ = \ (hn \ - \ hn1)/\sin\ \beta$$

c'est-à-dire :

$$hn1 \ = \ hn\text{-}a\ \sin\ \beta/\sin\ (\gamma n\text{-}\beta)$$

En général, ce décalage est effectué au niveau du premier rayon incident et il concerne donc la hauteur h0. Une fois faite la transformation de h0 en h01, les relations de récurrence s'appliquent à h01.

Le déplacement e1 suivant l'axe X-X, de l'intersection du rayon avec le dièdre est obtenu grâce à la relation :

$$e1/\cos\ \beta \ = \ a/\sin\ (\gamma n\text{-}\beta)$$

ou encore :

$$e1 = a \cos \beta / \sin (\gamma n - \beta)$$

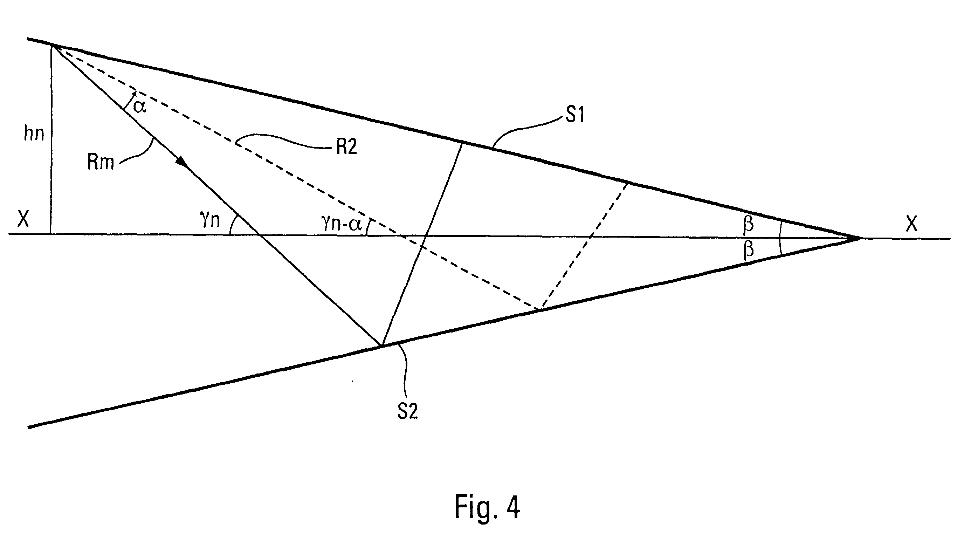

Par ailleurs, au lieu de présenter un décalage latéral, comme représenté sur la figure 3, un rayon de pompage marginal R2 peut également présenter une déviation angulaire $\alpha$, par rapport audit rayon moyen Rm à une hauteur hn, comme représenté sur la figure 4.

Dans ce cas, les formules de récurrence précitées restent applicables à condition de changer $\gamma n$ en $(\gamma n + \alpha)$, si la rotation est réalisée dans le sens trigonométrique, et en $(\gamma n - \alpha)$ si elle est réalisée dans le sens inverse.

Lorsque la déviation angulaire est appliquée sur le premier rayon incident et si $\alpha < \beta$, le rayon R2 fera le même nombre de réflexions avant retour.

De plus, si l'on est en configuration symétrique pour le rayon de référence, le rayon retournant correspondant au rayon R2 dévié fera un angle $\gamma nr = \pi/2 +/- \alpha$ avec l'axe X-X. Le décalage angulaire $\alpha$ par rapport au rayon moyen Rm se conserve tout au long de la propagation du rayon R2, en particulier lors du retour.

Par ailleurs, la largeur d de la face d'entrée 5B, 6B de l'élément optique 5, 6, c'est-à-dire la largeur de la fenêtre d'entrée du faisceau de pompage F1, F2 est déterminée, à partir des dimensions de la source de pompage 3, 4, ladite largeur d étant légèrement plus grande pour éviter audit faisceau de pompage tout risque de diaphragmer.

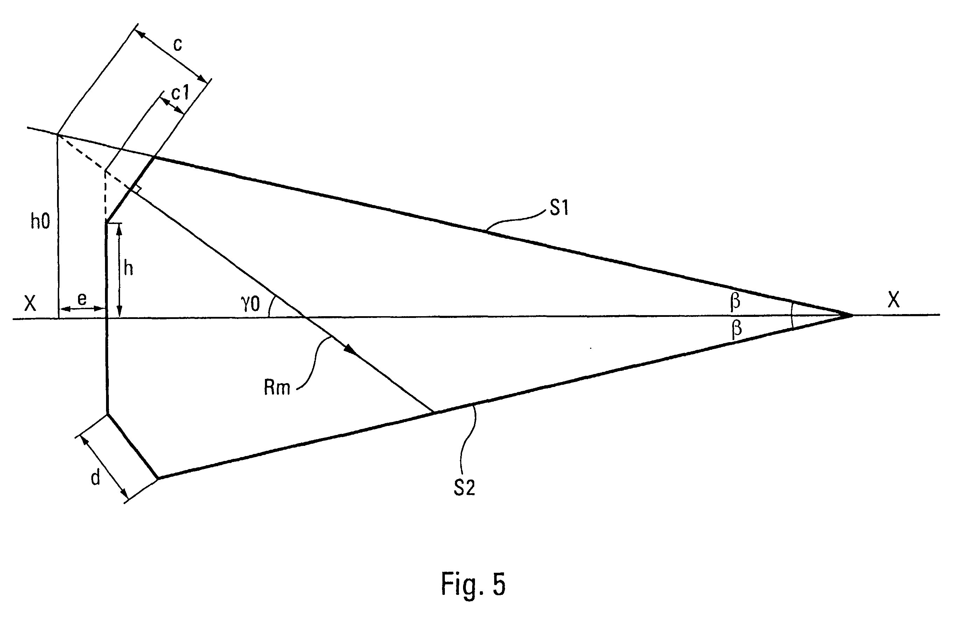

Comme cette largeur d est répartie symétriquement de part et d'autre du rayon de référence moyen Rm, il est possible de déterminer la distance e entre le plan de référence contenant h0 et l'extrémité d'entrée du guide prismatique, comme représenté sur la figure 5. Les longueurs c et c1 qui sont indiquées sur cette figure 5 vérifient les relations :

$$c = d/[2 \operatorname{tg} (\gamma 0 - \beta)] \qquad \text{et} \qquad c1 = [d \operatorname{tg} \gamma 0]/2$$

Par ailleurs, comme :

$$e = (c - c1) \cos \gamma 0,$$

on aboutit à la relation :

$$e = (d \cos \gamma 0)/2[\operatorname{tg}^{-1}(\gamma 0 - \beta) - \operatorname{tg} \gamma 0]$$

De plus, la hauteur h entre l'extrémité de la face d'entrée 5B et l'axe X-X du dièdre (figure 5) peut être calculée à partir de la relation :

$$h = h0 - c \sin \gamma 0 - (d \cos \gamma 0)/2$$

c'est-à-dire :

$$h = h0 - (d \cos \gamma 0)/2 [\operatorname{tg} \gamma 0 \operatorname{tg}^{-1}(\gamma 0 - \beta) + 1]$$

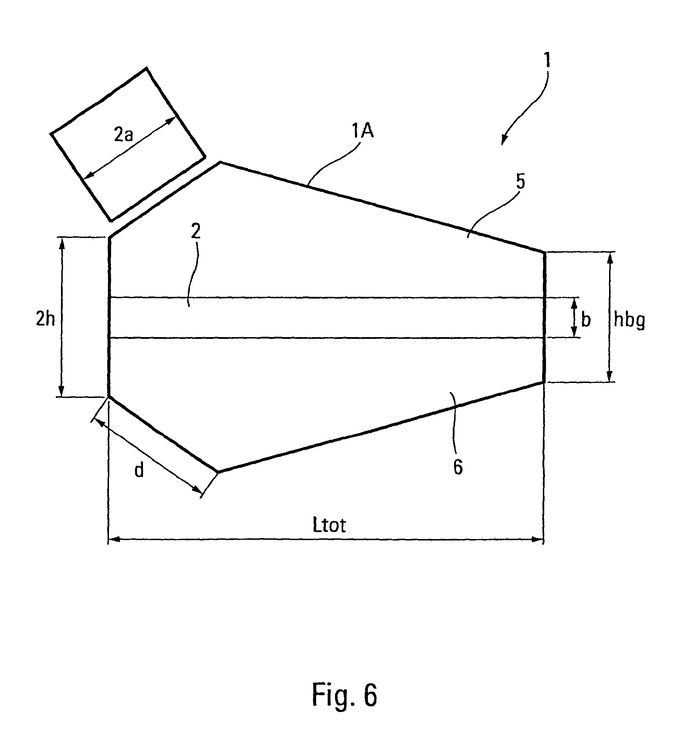

On précise ci-après les dimensions de deux modes de réalisation différents de la source laser 1 conforme à l'invention, en référence à la figure 6, à savoir :

- en premier lieu, un oscillateur ; et
- en second lieu, un amplificateur.

Concernant l'oscillateur, on choisit les paramètres d'entrée suivants :

- dimension de la face d'entrée : d = 12 mm,
- dimension du faisceau de pompage F1, F2 : 2a = 10,2 mm,
- hauteur du rayon moyen Rm de référence par rapport à l'axe X-X : h0 = 18 mm,
- angle d'incidence du rayon moyen par rapport à l'axe X-X : $\gamma$0 = 38°,
- nombre de réflexions en situation symétrique sur le rayon moyen Rm : n=2.

A partir de la relation (2) précitée, on obtient $\beta$ = 13°.

A partir de la relation (1) précitée, on obtient $\gamma$1 = 64° et $\gamma$2 = 90°.

Le rayon moyen Rm de référence issu d'une source de pompage 3 effectue donc cinq passages dans le milieu amplificateur avant de revenir sur la source de pompage 4 opposée. Si b est la dimension transversale du matériau dopé ou barreau 2, l'épaisseur totale btot du milieu actif traversé par le rayon moyen de référence Rm est :

$$btot \ = \ 2b/\sin \gamma 0 \ + \ 2b/\sin \gamma 1 \ + b$$

Dans l'exemple considéré ici : btot = 32,4 mm.

Les autres paramètres pour le rayon moyen Rm sont les suivants :

- l0 = 35,57 mm,
- h1 = 9,79 mm,
- l1 = 8,58 mm,
- h2 = 7,81 mm,
- e = 6,45 mm,
- h = 5,35 mm.

Pour la détermination de la longueur totale Ltot de l'élément actif 1A, il faut prendre en compte la propagation du rayon marginal le plus éloigné de l'axe X-X, ainsi que les relations de récurrence précitées.

On obtient alors de façon usuelle :

Ltot = 54,8 mm.

De plus, la dimension hbg à l'extrémité opposée aux faces d'entrée de l'élément actif 1 A mesure 7,72 mm.

En second lieu, concernant un exemple d'amplificateur, on prend comme paramètres d'entrée :

- d = 28 mm,
- 2a = 23 mm,
- h0 = 40 mm,
- $\gamma$0 = 38°,
- n = 2,
- b = 7 mm,

à partir desquels on calcule :

- $\beta$ = 13°,
- $\gamma$1 = 64°,
- $\gamma$2 = 90°,
- btot = 45,3 mm.

De plus, on obtient :

$$\begin{cases} Ltot \ = 124 \, mm \\ hbg \ = 7,94 \, mm \end{cases}$$

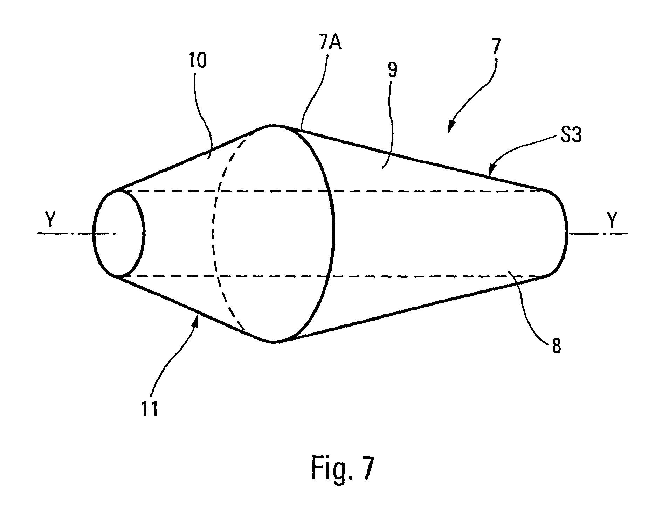

Dans un deuxième mode de réalisation représenté sur la figure 7, la source laser 7 comporte un élément actif 7A qui comprend :

- un barreau 8 allongé, de section transversale circulaire et d'axe Y-Y ; et
- un élément optique comprenant deux tronçons coniques 9 et 10 qui forment une seule pièce, qui sont coaxiaux à l'axe Y-Y et qui définissent respectivement des surfaces coniques S3 et 11. La surface coniques 11 sert de face d'entrée à un faisceau de pompage non représenté.

On notera que, dans ce cas, chacune des au moins deux faces de réflexion coopérantes est arrondie et forme une section non représentée de la surface conique S3 dudit tronçon conique 9.

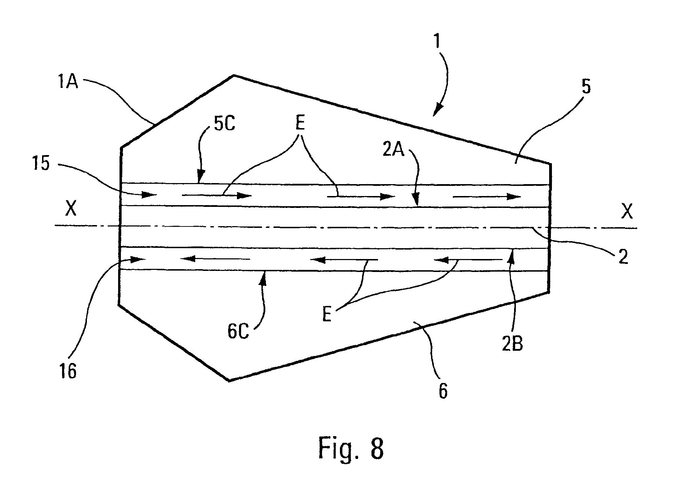

Par ailleurs, on a représenté sur la figure 8, une variante particulière du mode de réalisation 1A de la figure 1. Dans cette variante, les éléments optiques 5 et 6 ne sont pas prévus directement sur les faces 2A et 2B du barreau 2, mais ledit élément actif 1A comporte des passages 15 et 16 entre lesdites faces 2A et 2B et respectivement des faces 5C et 6C desdits éléments optiques 5 et 6, qui leur sont opposées. Ces passages 15 et 16 sont associés à des moyens connus et non représentés, qui engendrent une circulation de fluide de refroidissement, comme illustré par des flèches E, dans lesdits passages 15 et 16.

Bien que cela n'a pas été mentionné expressément, on notera que toutes les caractéristiques particulières (par exemple le type de matériau) dudit premier mode de réalisation 1A de la figure 1, qui sont applicables à au moins l'un desdits deuxième et troisième modes de réalisation respectivement des figures 7 et 8, font partie de la présente invention en combinaison avec le ou les modes de réalisation particuliers appropriés.

**Revendications**

1.  Elément actif pour source laser, ledit élément actif (1A, 7A) comportant un bloc optique (1A, 7A) qui comprend :

    - un barreau (2, 8) allongé, qui comprend une matrice dopée susceptible d'absorber un faisceau de pompage (F1, F2) pour amplifier un rayonnement laser se propageant longitudinalement, et qui est intégré dans ledit bloc optique (1A, 7A) ;
    - au moins une face d'entrée (5B, 6B, 11) du faisceau de pompage (F1, F2) ;
    - une première face de réflexion (S1, S3) du faisceau de pompage (F1, F2) qui est inclinée par rapport à l'axe longitudinal (X-X, Y-Y) dudit barreau (2, 8) ; et
    - au moins une seconde face de réflexion (S2, S3) qui coopère avec ladite première face de réflexion (S1, S3),

    **caractérisé en ce que** ladite face d'entrée (5B, 6B, 11) est inclinée par rapport à l'axe longitudinal (X-X, Y-Y) dudit barreau (2, 8).

2.  Elément actif selon la revendication 1,
    **caractérisé en ce que** ledit barreau (2) présente une section transversale rectangulaire, **en ce que** ledit bloc optique (1A) comporte au moins un premier élément optique (5) qui est réalisé dans un matériau présentant sensiblement le même indice optique que la matrice dudit barreau (2), qui est fixé sur une première face (2A) dudit barreau (2) et qui présente au moins une face (5A) inclinée par rapport à l'axe longitudinal (X-X) dudit barreau (2), et **en ce que** ladite première face de réflexion (S1) est formée sur ladite face inclinée (5A) dudit premier élément optique (5).

3.  Elément actif selon la revendication 2,
    **caractérisé en ce que** ledit bloc optique (1A) comporte un second élément optique (6) qui est réalisé dans un matériau présentant sensiblement le même indice optique que la matrice dudit barreau (2), qui est fixé sur une seconde face (2B) dudit barreau (2) et qui présente au moins une face (6A) inclinée par rapport à l'axe longitudinal (X-X) dudit barreau (2), et **en ce que** la seconde face de réflexion (S2) est formée sur ladite face inclinée (6A) dudit second élément optique (6).

4.  Elément actif selon la revendication 3,
    **caractérisé en ce que** lesdits premier et second éléments optiques (5, 6) sont identiques et sont fixés de façon symétrique sur ledit barreau (2).

5.  Elément actif selon la revendication 2,
    **caractérisé en ce que** ladite seconde face de réflexion est directement formée sur une face dudit barreau.

**6.** Elément actif selon la revendication 1,
**caractérisé en ce que** ledit barreau (8) présente une section transversale circulaire.

**7.** Elément actif selon l'une quelconque des revendications 1 à 6,
**caractérisé en ce que** lesdites faces de réflexion (S1, S2) sont planes.

**8.** Elément actif selon l'une quelconque des revendications 1 à 6,
**caractérisé en ce que** lesdites faces de réflexion (S3) sont arrondies.

**9.** Elément actif selon la revendication 8,
**caractérisé en ce que** chacune desdites faces de réflexion forme une section d'une surface conique (S3) d'un premier tronçon conique (9) d'un élément optique (7A).

**10.** Elément actif selon la revendication 9,
**caractérisé en ce que** ledit élément optique (7A) comprend un second tronçon conique (10), **en ce que** lesdits premier et second tronçons coniques (9, 10) entourent de façon coaxiale ledit barreau (8) et sont réalisés dans un matériau présentant sensiblement le même indice optique que la matrice dudit barreau (8), et **en ce que** la surface conique (11) dudit second tronçon conique (10) comprend ladite face d'entrée dudit bloc optique (7A).

**11.** Elément actif selon l'une quelconque des revendications 2 à 5, 9 et 10,
**caractérisé en ce qu'**au moins un élément optique (5, 6) est dopé.

**12.** Elément actif selon l'une quelconque des revendications 2 à 5 et 9 à 11,
**caractérisé en ce qu'**au moins un élément optique (5, 6) est réalisé dans au moins l'un des matériaux suivants : du grenat d'yttrium-aluminium, du vanadate, du verre et du saphir.

**13.** Elément actif selon l'une quelconque des revendications 2 à 5 et 9 à 12,
**caractérisé en ce qu'**au moins un élément optique (5, 6) est fixé par un soudage par diffusion sur ledit barreau (2).

**14.** Elément actif selon l'une quelconque des revendications précédentes,
**caractérisé en ce que** ladite face d'entrée (5B, 6B, 11) est munie d'un revêtement antireflet.

**15.** Elément actif selon l'une quelconque des revendications précédentes,
**caractérisé en ce qu'**il comporte des moyens engendrant une circulation de fluide de refroidissement directement sur au moins une face (2A, 2B) dudit barreau (2).

**16.** Source laser comportant :

- un élément actif (1A, 7A) pour source laser ; et
- au moins une source de pompage (3, 4) susceptible d'émettre un faisceau de pompage (F1, F2) pénétrant dans ledit élément actif (1A, 7A),

**caractérisée en ce que** ledit élément actif (1A, 7A) est un élément actif du type de celui spécifié sous l'une quelconque des revendications 1 à 15.

**17.** Source laser selon la revendication 16,
**caractérisée en ce que** la source de pompage (3, 4) présente une surface d'émission du faisceau de pompage, dont la largeur (2a) est plus petite d'une marge prédéfinie que la largeur (d) de ladite face d'entrée (5B, 6B) de l'élément actif (1A).

**Claims**

**1.** An active element for a laser source (1A, 7A), said active element comprising an optical block (1A, 7A) which includes:

- an elongate rod (2, 8), which comprises a doped matrix capable of absorbing a pump beam (F1, F2) in order to amplify laser radiation propagating longitudinally, and which is incorporated into said optical block (1A, 7A);
- at least one input face (5B, 6B, 11) for the pump beam (F1, F2);

- a first reflection face (S1, S3) for the pump beam (F1, F2) which is inclined with respect to the longitudinal axis (X-X, Y-Y) of said rod (2, 8); and
- at least one second reflection face (S2, S3) which interacts with said first reflection face (S1, S3),

**characterized in that** said input face (5B, 6B, 11) is inclined with respect to the longitudinal axis (X-X, Y-Y) of said rod (2, 8).

2. The active element as claimed in claim 1,
**characterized in that** said rod (2) has a rectangular cross section, and wherein said optical block (1A) comprises at least one first optical element (5) which is made from a material having substantially the same optical index as the matrix of said rod (2), which is fixed to a first face (2A) of said rod (2) and which has at least one face (5A) inclined with respect to the longitudinal axis (X-X) of said rod (2), and **in that** said first reflection face (S1) is formed on said inclined face (5A) of said first optical element (5).

3. The active element as claimed in claim 2,
**characterized in that** said optical block (1A) comprises a second optical element (6) which is made from a material having substantially the same optical index as the matrix of said rod (2) , which is fixed to a second face (2B) of said rod (2) and which has at least one face (6A) inclined with respect to the longitudinal axis (X-X) of said rod (2), and **in that** the second reflection face (S2) is formed on said inclined face (6A) of said second optical element (6).

4. The active element as claimed in claim 3,
**characterized in that** said first and second optical elements (5,6) are identical and are symmetrically fixed to said rod (2).

5. The active element as claimed in claim 2,
**characterized in that** said second reflection face is directly formed on one face of said rod.

6. The active element as claimed in claim 1,
**characterized in that** said rod (8) has a circular cross section.

7. The active element as claimed in any one of claims 1 to 6,
**characterized in that** said reflection faces (S1, S2) are flat.

8. The active element as claimed in any one of claims 1 to 6,
**characterized in that** said reflection faces (S3) are rounded.

9. The active element as claimed in claim 8,
**characterized in that** each of said reflection faces forms a part of a conical surface (S3) of a first conical section (9) of an optical element (7A).

10. The active element as claimed in claim 9,
**characterized in that** said optical element (7A) comprises a second conical section (10), **in that** said first and second conical sections (9, 10) coaxially surround said rod (8) and are made from a material having substantially the same optical index as the matrix of said rod (8), and **in that** the conical surface (11) of said second conical section (10) comprises said input face of said optical block (7A).

11. The active element as claimed in any one of claims 2 to 5 , 9 and 10,
**characterized in that** at least one optical element (5, 6) is doped.

12. The active element as claimed in any one of claims 2 to 5 and 9 to 11,
**characterized in that** at least one optical element (5, 6) is made from at least one of the following materials: yttrium aluminum garnet, vanadate, glass or sapphire.

13. The active element as claimed in any one of claims 2 to 5 and 9 to 12,
**characterized in that** at least one optical element (5, 6) is fixed by diffusion bonding to said rod (2).

14. The active element as claimed in any one of the preceding claims,
**characterized in that** said input face (5B, 6B, 11) is provided with an antireflection coating.

**15.** The active element as claimed in any one of the preceding claims,
**characterized in that** it comprises means for generating a flow of coolant directly over at least one face (2A, 2B) of said rod (2).

**16.** A laser source comprising:

- an active element (1A, 7A) for a laser source; and
- at least one pump source (3, 4) capable of emitting a pump beam (F1, F2) into said active element (1A, 7A),

**characterized in that** said active element (1A, 7A) is an active element of the type specified under any one of claims 1 to 15.

**17.** The laser source as claimed in claim 16,
**characterized in that** the pump source (3, 4) has an emission surface for the pump beam, the width (2a) of which is smaller, by a predefined margin, than the width (d) of said input face (5B, 6B) of the active element (1A).

**Patentansprüche**

**1.** Aktives Element für eine Laserquelle, wobei das aktive Element (1A, 7A) einen optischen Block (1A, 7A) aufweist, der Folgendes umfasst:

- einen langgestreckten Stab (2, 8), der eine dotierte Matrix umfasst, die geeignet ist, ein Pumpbündel (F1, F2) zu absorbieren, um eine Laserstrahlung zu verstärken, die sich in Längsrichtung ausbreitet, und der in den optischen Block (1A, 7A) integriert ist;
- mindestens eine Eintrittsfläche (5B, 6B, 11) für das Pumpbündel (F1, F2);
- eine erste Reflexionsfläche (S1, S3) für das Pumpbündel (F1, F2), die in Bezug auf die Längsachse (X-X, Y-Y) des Stabs (2, 8) geneigt ist; und
- mindestens eine zweite Reflexionsfläche (S2, S3), die mit der ersten Reflexionsfläche (S1, S3) zusammenarbeitet,

**dadurch gekennzeichnet, dass** die Eintrittsfläche (5B, 6B, 11) in Bezug auf die Längsachse (X-X, Y-Y) des Stabs (2, 8) geneigt ist.

**2.** Aktives Element nach Anspruch 1,
**dadurch gekennzeichnet, dass** der Stab (2) einen rechteckigen Querschnitt aufweist, dass der optische Block (1A) mindestens ein erstes optisches Element (5) umfasst, das aus einem Material gebildet ist, das im Wesentlichen den gleichen Brechungsindex wie die Matrix des Stabs (2) aufweist, das an einer ersten Fläche (2A) des Stabs (2) befestigt ist und das mindestens eine Fläche (5A) aufweist, die in Bezug auf die Längsachse (X-X) des Stabs (2) geneigt ist, und dass die erste Reflexionsfläche (S1) auf der geneigten Fläche (5A) des ersten optischen Elements (5) gebildet ist.

**3.** Aktives Element nach Anspruch 2,
**dadurch gekennzeichnet, dass** der optische Block (1A) ein zweites optisches Element (6) umfasst, das aus einem Material gefertigt ist, das im Wesentlichen den gleichen Brechungsindex wie die Matrix des Stabs (2) aufweist, das an einer zweiten Fläche (2B) des Stabs (2) befestigt ist und das mindestens eine Fläche (6A) aufweist, die in Bezug auf die Längsachse (X-X) des Stabs (2) geneigt ist, und dass die zweite Reflexionsfläche (S2) auf der geneigten Fläche (6A) des zweiten optischen Elements (6) gebildet ist.

**4.** Aktives Element nach Anspruch 3,
**dadurch gekennzeichnet, dass** das erste und zweite optische Element (5, 6) identisch sind und auf symmetrische Weise an dem Stab (2) befestigt sind.

**5.** Aktives Element nach Anspruch 2,
**dadurch gekennzeichnet, dass** die zweite Reflexionsfläche direkt an einer Fläche des Stabs gebildet ist.

**6.** Aktives Element nach Anspruch 1,
**dadurch gekennzeichnet, dass** der Stab (8) einen kreisförmigen Querschnitt aufweist.

**7.** Aktives Element nach einem der Ansprüche 1 bis 6,
**dadurch gekennzeichnet, dass** die Reflexionsflächen (S1, S2) eben sind.

**8.** Aktives Element nach einem der Ansprüche 1 bis 6,
**dadurch gekennzeichnet, dass** die Reflexionsflächen (S3) abgerundet sind.

**9.** Aktives Element nach Anspruch 8,
**dadurch gekennzeichnet, dass** jede der Reflexionsflächen einen Abschnitt einer Kegelfläche (S3) eines ersten Kegelstumpfes (9) eines optischen Elements (7A) bildet.

**10.** Aktives Element nach Anspruch 9,
**dadurch gekennzeichnet, dass** das optische Element (7A) einen zweiten Kegelstumpf (10) umfasst, dass der erste und zweite Kegelstumpf (9, 10) auf koaxiale Weise den Stab (8) umgeben und aus einem Material gefertigt sind, das im Wesentlichen den gleichen Brechungsindex wie die Matrix des Stabs (8) aufweist, und dass die Kegelfläche (11) des zweiten Kegelstumpfs (10) die Eintrittsfläche des optischen Blocks (7A) umfasst.

**11.** Aktives Element nach einem der Ansprüche 2 bis 5, 9 und 10,
**dadurch gekennzeichnet, dass** mindestens ein optisches Element (5, 6) dotiert ist.

**12.** Aktives Element nach einem der Ansprüche 2 bis 5 und 9 bis 11,
**dadurch gekennzeichnet, dass** mindestens ein optisches Element (5, 6) aus mindestens einem der folgenden Materialien gefertigt ist: Yttrium-Aluminium-Granat, Vanadat, Glas und Saphir.

**13.** Aktives Element nach einem der Ansprüche 2 bis 5 und 9 bis 12,
**dadurch gekennzeichnet, dass** mindestens ein optisches Element (5, 6) durch Diffusionsschweißen an dem Stab (2) befestigt ist.

**14.** Aktives Element nach einem der vorhergehenden Ansprüche,
**dadurch gekennzeichnet, dass** die Eintrittsfläche (5B, 6B, 11) mit einem Antireflexbelag versehen ist.

**15.** Aktives Element nach einem der vorhergehenden Ansprüche,
**dadurch gekennzeichnet, dass** es Mittel umfasst, die direkt an mindestens einer Fläche (2A, 2B) des Stabs (2) eine Kühlfluidzirkulation erzeugen.

**16.** Laserquelle, umfassend:

- ein aktives Element (1A, 7A) für eine Laserquelle; und
- mindestens eine Pumpquelle (3, 4), die geeignet ist, ein Pumpbündel (F1, F2) auszusenden, das in das aktive Element (1A, 7A) eindringt,

**dadurch gekennzeichnet, dass** das aktive Element (1A, 7A) ein aktives Element nach einem der Ansprüche 1 bis 15 ist.

**17.** Laserquelle nach Anspruch 16,
**dadurch gekennzeichnet, dass** die Pumpquelle (3, 4) eine Oberfläche zur Aussendung des Pumpbündels aufweist, deren Breite (2a) um eine vordefinierte Spanne kleiner ist als die Breite (d) der Eintrittsfläche (5B, 6B) des aktiven Elements (1A).

Fig. 1

Fig. 2

EP 1 115 186 B1

Fig. 3

EP 1 115 186 B1

Fig. 4

Fig. 5

Fig. 6

Fig. 7

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0377207 A
- US 4756002 A

- EP 0404635 A
- US 5048026 A